# EUROPÄISCHE PATENTANMELDUNG

(11) **EP 0 768 703 A2**
(43) Veröffentlichungstag der Anmeldung: **16.04.1997**
(21) Anmeldenummer: 96113593.6
(22) Anmeldetag: 24.08.1996
(51) Int. Cl.: H01L 21/00

(54) **Vorrichtung zur Herstellung von belichteten und metallisierten Substraten**

(30) Priorität: 09.10.1995 DE 19537409
(71) Anmelder: Balzers und Leybold Deutschland Holding Aktiengesellschaft, 63450 Hanau (DE)
(72) Erfinder: Hensel, Bernd, 65760 Eschborn (DE); Hofmann, Friedrich, 63654 Büdingen (DE); Reus, Manfred, 63579 Freigericht (DE); Koop, Hermann, Dr., 30952 Ronnenberg (DE)
(74) Vertreter: Schlagwein, Udo, Dipl.-Ing.

(57) **Zusammenfassung**

Eine Vorrichtung zur Herstellung von belichteten und metallisierten Substraten für die Masterscheibenfertigung hat hintereinander eine Scheibenbelackungsstation, einen Laser Beam Recorder, eine Entwicklungsstation und einen Metallisierer. Dem Laser Beam Recorder ist jeweils eine Kassettenstation (7) zum Zwischenspeichern von Substraten vor- und nachgeschaltet. Die Kassettenstation (7) hat ein fest installiertes Puffermagazin (9) für Substrate und ein der Vorrichtung entnehmbares Zusatzmagazin (10) für weitere Substrate. Dadurch kann man an der dem Laser Beam Recorder vorgeschalteten Kassettenstation mit dem Zusatzmagazin (10) Substrate entnehmen, auf einem separaten Laser Beam Recorder beschriften und danach wieder in die Produktionsanlage einschleusen.

## Beschreibung

Die Erfindung betrifft eine Vorrichtung zur Herstellung von belichteten und metallisierten Substraten für die Masterscheibenfertigung, welche hintereinander eine Scheibenbelackungsstation, einen Laser Beam Recorder, eine Entwicklungsstation und einen Metallisierer hat.

Vorrichtungen der vorstehenden Art werden derzeit für die Herstellung von optisch lesbaren Informationsträgern, insbesondere Compact Disks verwendet und sind allgemein bekannt. In ihnen sind die einzelnen Stationen hintereinander angeordnet, so daß die Substrate nacheinander automatisch von einer Station zur nächstfolgenden transportiert werden können. Nachteilig ist dabei, daß das Laserstrahlbelichten eines Substrates wesentlich mehr Zeit benötigt als die auf den übrigen Stationen durchzuführenden Arbeiten. Man könnte deshalb daran denken, eine Vorrichtung mit mehreren Laser Beam Recordern auszustatten, damit es durch das Aufbelichten der Informationen nicht zu einer unerwünschten Verzögerung der Produktionsgeschwindigkeit kommt. Es entstünden dann jedoch Vorrichtungen, welche für viele Benutzer, denen es nicht auf eine hohe Produktionsgeschwindigkeit ankommt, wesentlich zu teuer wären.

Der Erfindung liegt das Problem zugrunde, eine Vorrichtung der eingangs genannten Art zu entwickeln, welche mit geringem Aufwand so erweiterbar ist, daß sich höhere Fertigungsgeschwindigkeiten erzielen lassen.

Dieses Problem wird erfindungsgemäß dadurch gelöst, wenn dem Laser Beam Recorder jeweils eine Kassettenstation zum Zwischenspeichern von Substraten vor- und nachgeschaltet ist, wenn die Kassettenstation jeweils ein fest installiertes Puffermagazin für Substrate und ein der Vorrichtung entnehmbares Zusatzmagazin für weitere Substrate hat und wenn jeder Kassettenstation ein Handlingssystem zum bevorzugten Beschicken und Entleeren des Puffermagazins und anschließenden Bedienung des Zusatzmagazins zugeordnet ist.

Bei einer solchen Vorrichtung ist es möglich, hinter der Scheibenbelackungsstation Substrate zu entnehmen, diese in einer oder sogar mehreren zusätzlichen Laser Beam Recordern zu beschriften und die Substrate anschließend wieder hinter dem Laser Beam Recorder der Vorrichtung in den Fertigungsablauf einzuschleusen. Somit erreicht man eine hohe Fertigungsflexibilität, welche es ermöglicht, die Kapazität der Scheibenbelackungsstation und der nachgeschalteten Entwicklungs- und Metallisierstation voll zu nutzen, indem je nach Bedarf mit dem Zusatzmagazin zusätzliche Laser Beam Recorder mit Substraten beschickt werden.

Die Entnahme und das Wiedereinsetzen des Zusatzmagazins in die Kassettenstationen ist besonders einfach und rasch durchzuführen, wenn das Zusatzmagazin auf dem Puffermagazin lösbar befestigt ist.

Das Auswechseln von Substraten im Puffermagazin und Zusatzmagazin kann mit einfach gestalteten Handhabungseinrichtungen erfolgen, wenn gemäß einer anderen Weiterbildung der Erfindung das Puffermagazin und das Zusatzmagazin übereinander mehrere Substrataufnahmen hat, in welche Substrate einschiebbar sind, und daß die Einheit aus Puffermagazin und Zusatzmagazin in der Vorrichtung höhenverfahrbar angeordnet ist.

Die Erfindung läßt zahlreiche Ausführungsformen zu. Zur weiteren Verdeutlichung ihres Grundprinzips ist eine davon schematisch in der Zeichnung dargestellt und wird nachfolgend beschrieben. Diese zeigt in
- Fig.1: ein Produktionsschema für die erfindungsgemäße Vorrichtung,
- Fig.2: eine Ansicht einer Kassettenstation der Vorrichtung nach der Erfindung.

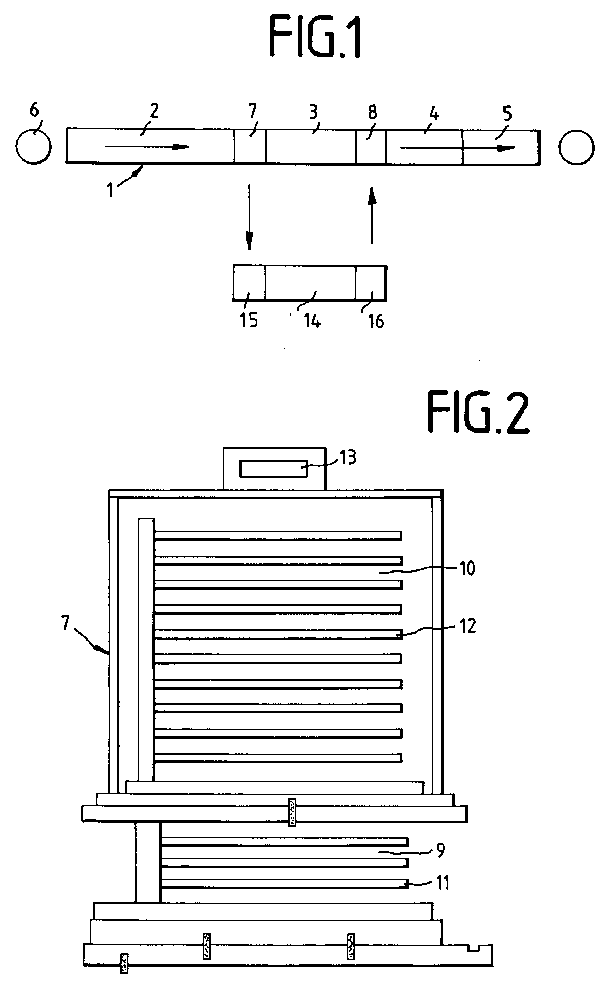

In Figur 1 ist schematisch eine Produktionsanlage 1 dargestellt, welche hintereinander eine Scheibenbelackungsstation 2 mit Trocknung, einen Laser Beam Recorder 3, eine Entwicklungsstation 4 und einen Metallisierer 5 hat. Zu verarbeitende Substrate 6 durchlaufen in der Zeichnung gesehen von links nach rechts diese einzelnen Stationen.

Wichtig für die Erfindung ist es, daß dem Laser Beam Recorder jeweils eine Kassettenstation 7, 8 vor- und nachgeschaltet ist. Die genauere Gestaltung der Kassettenstationen 7, 8 ist der Figur 2 zu entnehmen.

Jede Kassettenstation 7 oder 8 hat ein fest installiertes Puffermagazin 9 und darüber ein Zusatzmagazin 10. Bei dem gezeigten Ausführungsbeispiel hat das Puffermagazin 9 insgesamt drei übereinander liegende Substrataufnahmen 11, während das Zusatzmagazin 10 mit insgesamt zehn solcher Substrataufnahmen 12 versehen ist. An seiner oberen Seite hat das Zusatzmagazin 10 einen Griff 13, so daß man es bequem transportieren kann.

Die Figur 1 zeigt parallel zum Laser Beam Recorder 3 einen weiteren Laser Beam Recorder 14 mit einer vorgeschalteten Kassettenstation 15 und einer nachgeschalteten Kassettenstation 16. Dank der erfindungsgemäßen Gestaltung wird es möglich, der Produktionslinie an der Kassettenstation 7 ein mit Substraten 6 gefülltes Zusatzmagazin 10 zu entnehmen und dieses in die Kassettenstation 15 des parallel angeordneten Laser Beam Recorders einzusetzen. Beschriftete Substrate des Laser Beam Recorders 14 kann man von der Kassettenstation 16 auf gleiche Weise zurück in den Produktionsablauf führen, indem man das entsprechende Zusatzmagazin 10 in die Kassettenstation 8 einsetzt.

### Bezugszeichenliste

- 1: Produktionsanlage
- 2: Scheibenbelackungsstation
- 3: Laser Beam Recorder
- 4: Entwicklungsstation
- 5: Metallisierer
- 6: Substrate
- 7: Kassettenstation
- 8: Kassettenstation
- 9: Puffermagazin
- 10: Zusatzmagazin
- 11: Substrataufnahme
- 12: Substrataufnahme
- 13: Griff
- 14: Laser Beam Recorder
- 15: Kassettenstation
- 16: Kassettenstation

## Patentansprüche

1. Vorrichtung zur Herstellung von belichteten und metallisierten Substraten für die Masterscheibenfertigung, welche hintereinander eine Scheibenbelackungsstation, einen Laser Beam Recorder, eine Entwicklungsstation und einen Metallisierer hat, **dadurch gekennzeichnet,** daß dem Laser Beam Recorder (3) jeweils eine Kassettenstation (7, 8) zum Zwischenspeichern von Substraten (6) vor- und nachgeschaltet ist, daß die Kassettenstation (7, 8) jeweils ein fest installiertes Puffermagazin (9) für Substrate (6) und ein der Vorrichtung entnehmbares Zusatzmagazin (10) für weitere Substrate (6) hat und daß jeder Kassettenstation (7, 8) ein Handlingssystem zum bevorzugten Beschicken und Entleeren des Puffermagazins (9) und anschließenden Bedienung des Zusatzmagazins (10) zugeordnet ist.

2. Vorrichtung nach Anspruch 1, **dadurch gekennzeichnet,** daß das Zusatzmagazin (10) auf dem Puffermagazin (9) lösbar befestigt ist.

3. Vorrichtung nach Anspruch 2, **dadurch gekennzeichnet,** daß das Puffermagazin (9) und das Zusatzmagazin (10) übereinander mehrere Substrataufnahmen (11, 12) hat, in welche Substrate (6) einschiebbar sind, und daß die Einheit aus Puffermagazin (9) und Zusatzmagazin (10) in der Vorrichtung höhenverfahrbar angeordnet ist.
